# EUROPEAN PATENT APPLICATION

(11) **EP 2 611 174 A2**
(43) Date of publication of application: **03.07.2013**
(21) Application number: 12193929.2
(22) Date of filing: 22.11.2012
(51) Int. Cl.: H04N 13/04

(54) **Display apparatus for displaying a plurality of contents views, glasses apparatus, display system comprising them, and display methods thereof**

(30) Priority: 28.12.2011 KR 20110145126; 29.12.2011 KR 20110145801; 19.04.2012 KR 20120040825
(71) Applicant: Samsung Electronics Co., Ltd., Gyeonggi-do 443-742 (KR)
(72) Inventor: Cho, Bong-hwan, Gyeonggi-do (KR); Ka, Jee-hoon, Gyeonggi-do (KR); Kim, Hyung-rae, Seoul (KR); Park, Jae-sung, Gyeonggi-do (KR); Sung, Jun-ho, Seoul (KR); Yun, Sang-un, Seoul (KR); Lee, Sang-jun, Gyeonggi-do (KR); Hwang, Min-cheol, Seoul (KR)
(74) Representative: Clark, David James

(57) **Abstract**

A display apparatus is provided. The apparatus includes plurality of receivers which receive a plurality of content; a signal processor which generates image frames by processing each of the content; an output which displays a plurality of content views by combining the image frames of each content; a synchronization signal generator which generates a synchronization signal to synchronize the plurality of the content views and a plurality of glasses apparatus; an interface which transmits the synchronization signal to the plurality of the glasses apparatus; a storage which stores glass characteristic information; and a controller which controls the signal processor to process the plurality of the content according to the glass characteristic information. Thus, image quality adequate for the glass apparatus can be provided.

## Description

### BACKGROUND

### 1. Field

The present general inventive concept relates to a display apparatus, glasses apparatus, a display system including them, and display methods thereof. More particularly, the present general inventive concept relates to a display apparatus for displaying a plurality of content views, a glasses apparatus, a display system including both a display apparatus and a glasses apparatus, and display methods thereof.

### 2. Description of the Related Art

In accordance with advance of electronic technologies, various electronic products are developed and supplied. Particularly, display apparatuses such as TV, mobile phone, PC, notebook PC, and PDA are widely used as household goods.

As the use of the display apparatuses is increasing, user needs for various functions also increase. Hence, manufacturers exert more efforts to meet those user needs, and products with totally new functions are emerging.

In this regard, various content is processed by the display apparatus. Particularly, content of great data size, such as high-resolution content or 3D content, are now being provided by various content providers.

To display the 3D content, the display apparatus may be implemented using shutter glasses or polarized glasses.

According to the shutter glasses type, the display apparatus alternately arranges and displays a left-eye image and a right-eye image. A user watches the 3D content by wearing 3D glasses including a left shutter glass and a right shutter glass. The 3D glasses alternately open the left shutter glass and the right shutter glass in accordance with driving times of the left-eye image and the right-eye image.

To display the 3D content, the display apparatus requires more components than a conventional display apparatus. Attempts are being made to variously utilize the added components of the display apparatus.

However, the display apparatus works in association with the glasses. When characteristics of the glasses do not accord with the display apparatus, the user cannot view the content or optimal image quality is not achieved. In particular, when the glasses driving scheme differs because of a different manufacturing company than the manufacturing company of the display apparatus, the user wearing one pair of glasses cannot view the display apparatus of a different company from time to time. As a result, various applications of the display apparatus are limited.

In this respect, what is needed is a technique for utilizing the display apparatus with various features and equipment and increasing user satisfaction.

### SUMMARY

An aspect of the present general inventive concept has been provided to solve the above-mentioned and/or other problems and disadvantages. Accordingly, an aspect of the present general inventive concept provides a display apparatus for displaying a plurality of content views and improving viewer satisfaction, glasses apparatus, a display system including both, and display methods thereof.

According to an aspect of an exemplary embodiment, a display apparatus includes a plurality of receivers which receive a plurality of content; a signal processor which generates image frames by processing each of the plurality of content; an output which displays a plurality of content views by combining the image frames of each of the plurality of content; a synchronization signal generator which generates a synchronization signal to synchronize the plurality of the content views and a plurality of glasses; an interface which transmits the synchronization signal to the plurality of the glasses; a storage which stores glasses' characteristic information; and a controller which controls the signal processor to process the plurality of content according to the glasses' characteristic information.

When new glasses are added, the controller may request and receive the glasses' characteristic information to and from the new glasses.

The interface may pair with the plurality of the glasses. When pairing with the plurality of the glasses, the controller may sequentially match the plurality of the glasses and the plurality of the content views according to a pairing order.

The controller may process to adjust at least one of a white balance, a contrast, a brightness, a color, an optical wavelength, and an optical intensity of the image frame of each content according to the glasses' characteristic information.

The plurality of the content each may be a 2D content or a 3D content.

When at least one of the glasses is turned off, the controller may control the signal processor and the output to output an inactive screen in the content view corresponding to the turned-off glasses.

The storage may store driving information of the display apparatus, and the controller may control the synchronization signal generator and the interface to generate the synchronization signal to synchronize the plurality of the content views and the plurality of glasses using the driving information and the glasses' characteristic information and to transmit the synchronization signal to each pair of glasses of the plurality of glasses.

The controller may control the signal processor and the output to divide the image frames of the content views to odd line frames and even line frames, to alternately display the frames in one content view, and to scan another frame on a display panel while one of the odd line frame and the even line frame is displayed.

The controller may determine a delay time and a duty to drive the glasses matched to the content view while the odd line frame and the even line frame are displayed in one content view using the driving information, and control the synchronization signal generator to generate the synchronization signal comprising information of the determined delay time and duty.

The controller may control the output to scan image frame data of a next content view while an image frame of a previous content view among the plurality of the content views is displayed, and to display the image frame of the next content view scanned when the image frame display of the previous content view is completed.

The controller may determine a delay time and a duty to drive the glasses matched to the corresponding content view while the image frame of each content view is displayed using the driving information, and control the synchronization signal generator to generate the synchronization signal comprising information of the determined delay time and duty.

The synchronization signal generator may generate the synchronization signal comprising unique information of each pair of glasses of the plurality of glasses and driving control information to control a driving status of each pair of glasses of the plurality of glasses based on a plurality of synchronization cycles, and transmit the synchronization signal through the interface.

In an initial synchronization cycle of the plurality of the synchronization cycles, the synchronization signal generator may generate the synchronization signal comprising the unique information of each pair of glasses of the plurality of glasses and the driving control information to control the driving status of each pair of glasses of the plurality of glasses and transmit the synchronization signal through the interface. After the next synchronization cycle, the synchronization signal generator may generate a synchronization signal not comprising the unique information and the driving control information and transmit the synchronization signal through the interface.

A display method of a display apparatus includes receiving a plurality of content; receiving glasses' characteristic information from a plurality of glasses; generating image frames by processing the plurality of the content according to the glasses' characteristic information of each of the plurality of glasses; and displaying a plurality of content views by combining the image frames of each content of the plurality of content.

The display method may further include generating a synchronization signal to synchronize the plurality of the content views and the plurality of the glasses, and transmitting the generated synchronization signal to the plurality of the glasses; and storing the received glasses' characteristic information.

The display method may further include when the display apparatus is turned on, determining whether the glasses have changed. The operation for generating the image frames may include when the glasses are determined to be previously existing glasses, processing the content corresponding to the glasses using the stored glasses' characteristic information; and when the glasses are determined to be new glasses, requesting and receiving the glasses' characteristic information to and from the new glasses.

The display method may further include pairing with the plurality of the glasses; and sequentially matching the plurality of the glasses and the plurality of the content views according to a pairing order.

The operation for generating the image frames may include detecting image data of each content; generating the image frame by decoding the image data; and adjusting at least one of a white balance, a contrast, a brightness, a color, an optical wavelength, and an optical intensity of the image frame of each content according to the glasses' characteristic information.

The plurality of the content each may include a 2D content or a 3D content.

The display method may further include when at least one of the glasses is turned off, outputting an inactive screen in a content view location corresponding to the turned-off glasses.

The display method may further include generating the synchronization signal to synchronize the plurality of the content views and the plurality of the glasses using pre-stored driving information and the glasses' characteristic information; and transmitting the synchronization signal to each pair of glasses of the plurality of glasses.

The operation for displaying the plurality of the content views may divide the image frames of the content views to odd line frames and even line frames, alternately display the frames in one content view, and scan another frame on a display panel while one of the odd line frame and the even line frame is displayed on the display panel.

The operating for generating the synchronization signal may determine a delay time and a duty to drive the glasses matched to the content view while the odd line frame and the even line frame are displayed in one content view, and generate the synchronization signal comprising information of the determined delay time and duty.

The operation for displaying the plurality of the content views may scan image frame data of a next content view while an image frame of a previous content view among the plurality of the content views is displayed, and display the image frame of the next content view scanned when the image frame display of the previous content view is completed.

The operating for generating the synchronization signal may determine a delay time and a duty to drive the glasses matched to the corresponding content view while the image frame of each content view is displayed, and generate the synchronization signal comprising information of the determined delay time and duty.

The operating for generating the synchronization signal may generate the synchronization signal comprising unique information of each pair of glasses of the plurality of glasses and driving control information to control a driving status of each pair of glasses of the plurality of glasses based on a plurality of synchronization cycles.

In an initial synchronization cycle of the plurality of the synchronization cycles, the operating for generating the synchronization signal may generate the synchronization signal comprising the unique information of each pair of glasses of the plurality of glasses and the driving control information to control the driving status of each pair of glasses of the plurality of glasses. After the next synchronization cycle, the operating for generating the synchronization signal may generate a synchronization signal not comprising the unique information and the driving control information.

Glasses working with a display apparatus which provides a plurality of content views includes a first shutter glass; a second shutter glass; an interface for receiving a synchronization signal from the display; a shutter glass driver which drives the first shutter glass and the second shutter glass according to the synchronization signal; a storage which stores the glasses' characteristic information; and a controller which transmits the glasses' characteristic information to the display through the interface.

A display system includes a display which when a multi-view mode starts, receives a plurality of content and displays a plurality of content views by combining image frames of each of the plurality of content; and at least one pair of glasses for driving in synchronization with an output timing of the matching content view among the plurality of the content. The display processes the content of the content view matched to the at least one pair of glasses using glasses' characteristic information of the at least one pair of glasses.

According to various aspects of the present general inventive concept, the display apparatus can be used in more various manners and viewer satisfaction can be enhanced.

According to the present invention there is provided an apparatus and method as set forth in the appended claims. Other features of the invention will be apparent from the dependent claims, and the description which follows.

### BRIEF DESCRIPTION OF THE DRAWING FIGURES

These and/or other aspects and advantages of the present general inventive concept will become apparent and more readily appreciated from the following description of the embodiments, taken in conjunction with the accompanying drawings of which:
FIG. 1 is a block diagram of a display apparatus according to an exemplary embodiment;
FIG. 2 is a diagram of display of a plurality of 3D content in a multi-view mode;
FIG. 3 is a diagram of display of a plurality of 2D content in the multi-view mode;
FIG. 4 is a diagram of content view constitution corresponding to the plurality of the 3D content;
FIG. 5 is a diagram of content view constitution corresponding to the plurality of the 2D content;
FIG. 6 is a diagram of a processing method when glasses are turned off in the multi-view mode displaying the plurality of the 3D content;
FIG. 7 is a diagram of a processing method when the glasses are turned off in the multi-view mode displaying the plurality of the 2D content;
FIG. 8 is a block diagram of the glasses according to an exemplary embodiment;
FIGS. 9 and 10 are flowcharts of a display method according to various exemplary embodiments;
FIG. 11 is a diagram of a first driving scheme of a 3D multi-view mode for scanning and displaying frames by dividing every frame into even lines and odd lines;
FIG. 12 is a diagram of a second driving scheme of the 3D multi-view mode for scanning and displaying on the frame basis;
FIGS. 13 and 14 are diagrams of the first driving scheme of the 2D multi-view mode for scanning and displaying frames by dividing every frame into even lines and odd lines;
FIGS. 15 and 16 are diagrams of the second driving scheme of the 2D multi-view mode for scanning and displaying on the frame basis;
FIGS. 17 and 18 are diagrams of the first driving scheme of the 2D multi-view mode for scanning and displaying three 2D content by dividing the frame into even lines and odd lines;
FIGS. 19 and 20 are diagrams of the second driving scheme of the 2D multi-view mode for scanning and displaying three 2D content on the frame basis;
FIG. 21 is a diagram of the first driving scheme of the 2D multi-view mode for scanning and displaying four 2D content by dividing the frame into even lines and odd lines;
FIG. 22 is a diagram of the second driving scheme of the 2D multi-view mode for scanning and displaying four 2D content on the frame basis;
FIGS. 23 and 24 are diagrams of various synchronization signal transmission methods; and
FIG. 25 is a flowchart of a display method according to various exemplary embodiments.

### DETAILED DESCRIPTION OF THE EXEMPLARY EMBODIMENTS

Reference will now be made in detail to the exemplary embodiments of the present general inventive concept, examples of which are illustrated in the accompanying drawings, wherein like reference numerals refer to the like elements throughout. The exemplary embodiments are described below to explain the present general inventive concept by referring to the figures.

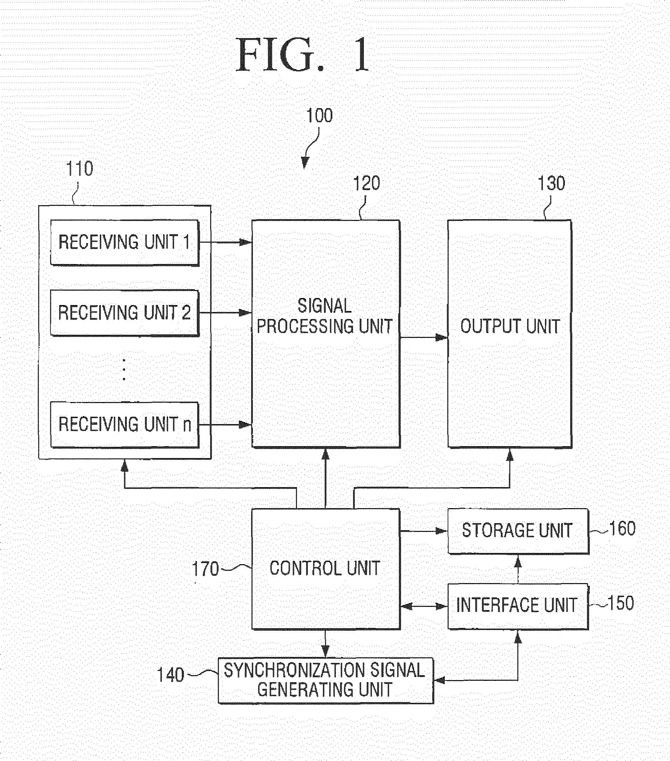

FIG. 1 is a block diagram of a display apparatus according to an exemplary embodiment of the present general inventive concept. The display apparatus 100 of FIG. 1 can be implemented using various devices including a display unit, such as TV, mobile phone, PDA, notebook PC, monitor, tablet PC, e-book, digital frame, and kiosk.

Referring to FIG. 1, the display apparatus 100 includes a plurality of receiving units 110 (e.g. receivers), a signal processing unit 120 (e.g. a signal processor), an output unit 130 (e.g. an output), a synchronization signal generating unit 140 (e.g. a synchronization signal generator), an interface unit 150 (e.g. an interface), a storage unit 160 (e.g. a storage), and a control unit 170 (e.g. a controller).

The first through n-th receiving units 110 receive content from different sources. The sources may include a broadcasting station for transmitting broadcasting program content using a broadcasting network, a web server for transmitting a content file over the Internet, and various recording medium players which are embedded in or connected to the display apparatus 100. The recording medium player indicates a device which plays the content stored in various recording media such as CD, DVD, hard disc, Blu-ray disc, memory card, and USB memory.

When receiving the content from the broadcasting station, the receiving units 110 can include a tuner, a demodulator, an equalizer, and a decoder (not shown). By contrast, when the content is received from the source such as web server, the receiving units 110 can be realized as a network interface card (not shown). When the content is received from various recording medium players, the receiving units 110 can include an interface (not shown) connected to the recording medium player. As such, the receiving units 110 can be implemented in various ways.

The receiving units 110 do not necessarily receive the content from the sources of the same type, and may receive the content from the sources of different types. For example, the first receiving unit may include a tuner, a demodulator, an equalizer, and a decoder and the second receiving unit may include a network interface card.

The signal processing unit 120 processes the content received at the receiving units 110 to output data. The signal processing unit 120 can include a DEMUX (not shown), a video processor (not shown), and an audio processor (not shown). The DEMUX separates video data and audio data from the content. The video processor decodes the separated video data, scales the video data in accordance with a screen size, and converts a frame rate according to the output rate. The audio processor decodes the audio data separated by the DEMUX.

The output unit 130 includes a video output unit (not shown) and an audio output unit (not shown). The video output unit combines and displays the video data of the content output from the signal processing unit 120. For example, in the shutter-glass display apparatus, the video output unit generates and displays a plurality of content views by alternately arranging at least one image frame of the first content and at least one image frame of the second content. In the polarized display apparatus, the video output unit generates and displays one or more multi-content frames by dividing each content into a plurality of lines and alternately combining the divided lines. In the polarized display type, a glasses apparatus for viewing the 3D content is different than a glasses apparatus for using the multi-view mode. That is, the glasses apparatus for viewing the 3D content has different polarization directions of the left eye and the right eye lenses, and the glasses apparatus for using the multi-view mode has the same polarization direction of the left eye lens and the right eye lens.

The audio output unit of the output unit 130 can modulate the audio data processed by the signal processing unit 130 to different radio frequency signals and send the radio frequency signals to the respective glasses apparatus, or generate one audio stream with the audio data and send the audio stream to the glasses apparatus through the interface unit 150. With the single audio stream, each glasses apparatus can detect only the audio data of its allocated time slot according to time division and output the audio data through its speaker or earphone.

The interface unit 150 can communicate with the glasses apparatus. In detail, the interface unit 150 can transmit an audio signal or a synchronization signal to the glasses apparatus according to various wireless communication standards such as Bluetooth, Wi-Fi, Zigbee, and IEEE. Alternatively, the interface unit 150 can be implemented using an IR lamp for sending an IR synchronization signal or an RF transmitter for outputting an RF synchronization signal. The interface unit 150 can receive glasses' characteristic information from the glasses apparatus connected to the display apparatus 100. The received glasses' characteristic information is stored to the storage unit 160.

The synchronization signal generating unit 140 generates synchronization signals for synchronizing the plurality of the content views output from the output unit 130 and the plurality of the glasses apparatus and sends the generated synchronization signals to the respective glasses apparatus through the interface unit 150. The synchronization signal generating unit 140 can generate the synchronization signal in a format corresponding to the interfacing scheme of the glasses apparatus. That is, the synchronization signal generating unit 140 can generate the synchronization signal in the form of a data stream, an RF signal, and an IR signal in conformity to various wireless communication standards.

The storage unit 160 stores the glasses' characteristic information received through the interface unit 150. The glasses' characteristic information can include company information, use time information, glasses' status information, optical type information, maximum driving frequency information, Liquid Crystal Display (LCD) response time information, optical transmittance information per wavelength, and primary/secondary color coordinate information. The company information includes a glasses apparatus name, a serial number, a manufacturer, and year of production. The use time information includes glass use time and battery status information. The glasses' status information indicates a structure of the glasses, and the optical type information indicates whether the corresponding glasses apparatus adopts circular polarization or linear polarization and which direction is the polarization direction. The maximum driving frequency information can include a frequency range for driving the glasses apparatus, and degradation information of the glasses characteristics per frequency. The LCD response time information indicates an LCD response time when the driving waveform is applied to the panel. The optical transmittance information per wavelength includes characteristic information of degradation level of the glasses view per wavelength band, and the primary/secondary color coordinate information indicates color coordinate characteristic information of the glasses view based on the primary light source or the secondary light source.

The storage unit 160 can store driving information in addition to the glasses characteristic information. In detail, the driving information includes delay information, individual glasses' operation information, on duty value information, and status information display method. The type of the driving information and the processing using the driving information shall be explained.

The storage unit 160 may match and store an image quality adjustment value corresponding to the glasses' characteristic information of each glasses apparatus and an ID of the glasses apparatus.

The control unit 170 controls the operations of the display apparatus 100. The control unit 170 can change an operation mode of the display apparatus 100 according to user's selection. The user can select one of various operation modes including a single view mode for viewing the single content and a multi-view mode for viewing a plurality of content. While the single view mode outputs the single content such as 2D content or 3D content, the multi-view mode provides the plurality of the content combined in the plurality of the content views as explained earlier. In the multi-view mode, even when the content play allocated to one content view is ended and the next content is played, the content view still remains.

The multi-view mode can include various modes such as dual-view mode, triple-view mode, and quadruple-view mode based on the number of the content views. Hereafter, such modes are referred to as the multi-view mode. When the user inputs a mode change command in the single-view mode, the control unit 170 controls the output unit 130 to combine and output the plurality of the content. Upon entering the multi-view mode, the control unit 170 controls the synchronization signal generating unit 140 and the interface unit 150 to send the synchronization signals to the glasses apparatus matched to the content.

The control unit 170 controls the signal processing unit 120 to generate an image frame according to the glasses' characteristic information stored to the storage unit 160. When the glasses apparatus is paired, the control unit 170 requests the corresponding glasses apparatus to transmit the glasses' characteristic information. Upon receiving the glasses' characteristic information according to the request, the control unit 170 stores the received glasses' characteristic information to the storage unit 160. When the glasses' characteristic information of the paired glasses apparatus is already stored to the storage unit 160, the control unit 170 may use the stored glasses' characteristic information.

In more detail, using the company information or the optical type information of the glasses apparatus, the control unit 170 checks whether the corresponding glasses apparatus and the display apparatus can be matched, and whether matching is supported. When the glasses apparatus does not allow the matching, the control unit 170 does not permit the pairing with the corresponding glasses apparatus. The control unit 170 can obtain the use time of the glasses apparatus using the use time information, and utilize the use time as the basis for compensating for the degradation of the LCD and the filter of the glasses apparatus as time passes. That is, to compensate for the LCD and filter characteristic degradation with the lapse of time, the control unit 170 controls the output unit 130 to control the wavelength and the intensity of the light source.

The control unit 170 controls the synchronization signal generating unit 140 and the interface unit 150 to adjust and send the frequency and the duty of the synchronization signal to each glasses apparatus according to the driving information stored in the storage unit 160.

Meanwhile, the display apparatus is generally shipped in accordance with the color temperature preferable by the user so that the user can view the optimal image quality. Up to now, the color temperature is adjusted just once at the phase of the shipment. Next, when the glasses apparatus is changed, the color temperature needs to be adjusted. Such adjustment is difficult to the user. Hence, the control unit 170 can control the signal processing unit 120 to adjust the white balance between the glasses apparatus and the display apparatus using the glasses' characteristic information. The control unit 170 can store the color coordinates such as R, G, B, C, M, Y and K according to transmission characteristics of a particular light, and control the signal processing unit 120 to perform the color gamut mapping. As such, the control unit 170 controls the signal processing unit 120 and the output unit 130 to adjust white balance, contrast, brightness, color, optical wavelength, and optical intensity of the image frame using the glasses' characteristic information, and thus matches the properties of the display apparatus and the glasses apparatus.

The control unit 170 controls the signal processing unit 120 to combine the image frames of the plurality of the content using the driving information stored to the storage unit 160. The control unit 170 defines a delay time and a duty ratio up to the shutter glasses open time matched to each glasses apparatus based on a rising edge or a falling edge of the synchronization signal, and thus controls the synchronization signal generating unit 140 to generate the synchronization signal.

As above, the control unit 170 can provide the content view of the optimal image quality using the various information stored in the storage unit 160. The content provided in the multi-view mode can be a plurality of 2D content or a plurality of 3D content.

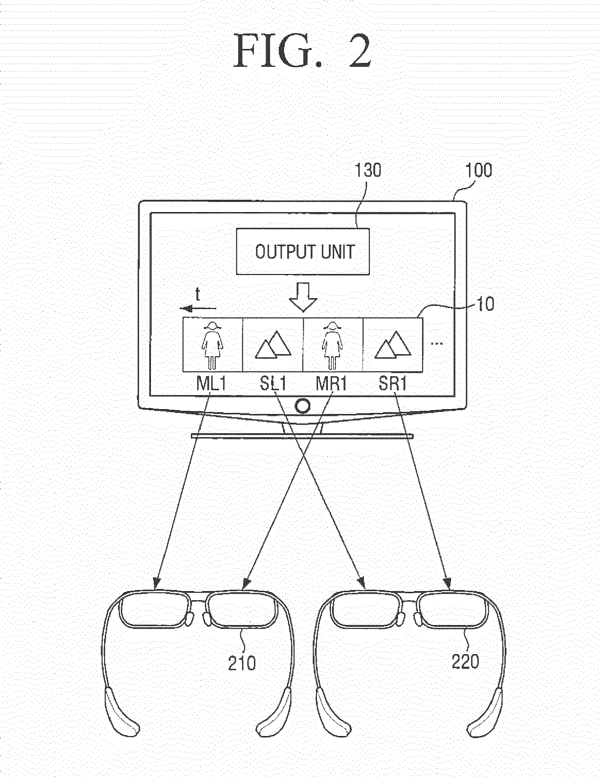

FIG. 2 is a diagram of operations of a display system according to an exemplary embodiment of the present general inventive concept. Referring to FIG. 2, the display system includes a display apparatus and at least one glasses apparatus.

When the multi-view mode commences, the display apparatus 100 receives a plurality of content, combines image frames of the content, and displays a plurality of content views.

The glasses apparatus 210 and 220 are driven in synchronization with the output timing of the matching content view among the plurality of the content views.

Using the glasses' characteristic information of the glasses apparatus 210 and 220, the display apparatus 100 processes the content of the content views matched to the glasses apparatus 210 and 220.

In detail, FIG. 2 depicts the display of a plurality of 3D content received. Referring to FIG. 2, the output unit 130 of the display apparatus 100 displays on the screen, a plurality of content views 10 including left-eye images and right-eye images of the 3D content. Each content view 10 includes the image frame of the screen size.

The display apparatus 100 sends the synchronization signal for synchronizing the different 3D glasses apparatus at the output timings of the left-eye image and the right-eye image. Upon receiving the synchronization signal, the glasses apparatus 210 and 220 can identify the display timing corresponding to their glasses apparatus information and open or close a left-eye shutter glass or a right-eye shutter glass according to the identified display timing.

The left-eye image frame and the right-eye image frame of each 3D content can be arranged and displayed in the plurality of the content views according to a preset arrangement pattern.

More specifically, in FIG. 2, the left-eye image ML1 of the main 3D content is displayed in the first content view, the left-eye image SL1 of the sub 2D content is displayed in the second content view, the right-eye image MR1 of the main 3D content is displayed in the third content view, and the right-eye image SR1 of the sub 2D content is displayed in the fourth content view.

The first glasses apparatus 210 watching the main 3D content turns on the left-eye glass and turns off the right-eye glass when the left-eye image ML1 of the main 3D content is displayed, and turns on the right-eye glass and turns off the left-eye glass when the right-eye image MR1 of the main 3D content is displayed. In contrast, when the left-eye image SL1 and the right-eye image SR1 of the sub 3D content are displayed, the first glasses apparatus 210 turns off both of the left-eye glass and the right-eye glass. Conversely, the second glasses apparatus 220 turns off both of the left-eye glass and the right-eye glass when the left-eye image ML1 and the right-eye image MR1 of the main 3D content are displayed. Thus, a user wearing the first glasses apparatus 210 can watch the main 3D content, and user wearing the second glasses apparatus 220 can watch the sub 3D content.

The display apparatus 100 processes the main 3D content according to the glasses' characteristic information of the first glasses apparatus 210, and thus adjusts the image quality or other output characteristics. The display apparatus 100 processes the sub 3D content according to the glasses' characteristic information of the second glasses apparatus 210 and thus adjusts the image quality or other output characteristics.

The glasses' characteristic information may be received from the glasses apparatus 210 and 220 when or after the glasses apparatus 210 and 220 are paired, and may utilize the pre-stored information, if any.

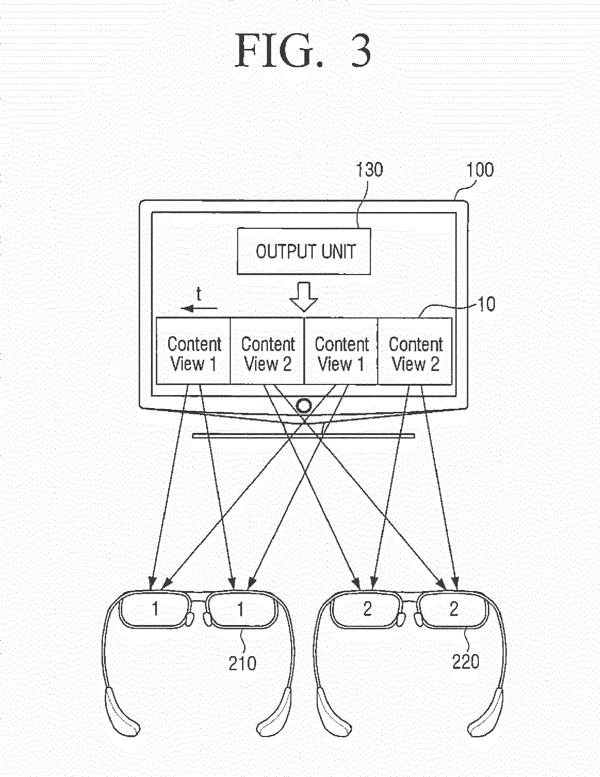

FIG. 3 depicts the display of a plurality of 2D content received in the display system. Referring to FIG. 3, first and second content views display image frames of different content. The glasses apparatus 210 and 220 collectively open the left-eye and right-eye glasses at the output timing of the corresponding content view. In FIG. 3, the first glasses apparatus 210 can view the first content view and the second glasses apparatus 220 can view the second content view.

The display apparatus 100 matches the content views according to the pairing order of the glasses apparatus 210 and 220. When the first glasses apparatus 210 is first paired in the dual-view mode showing two content views, the first content view is mapped. Next, when the second glasses apparatus 220 is paired, the second content view is mapped. The display apparatus 100 adjusts the quality of the image frames to be displayed in the first and second content views according to the glasses' characteristic information of the glasses apparatus 210 and 220.

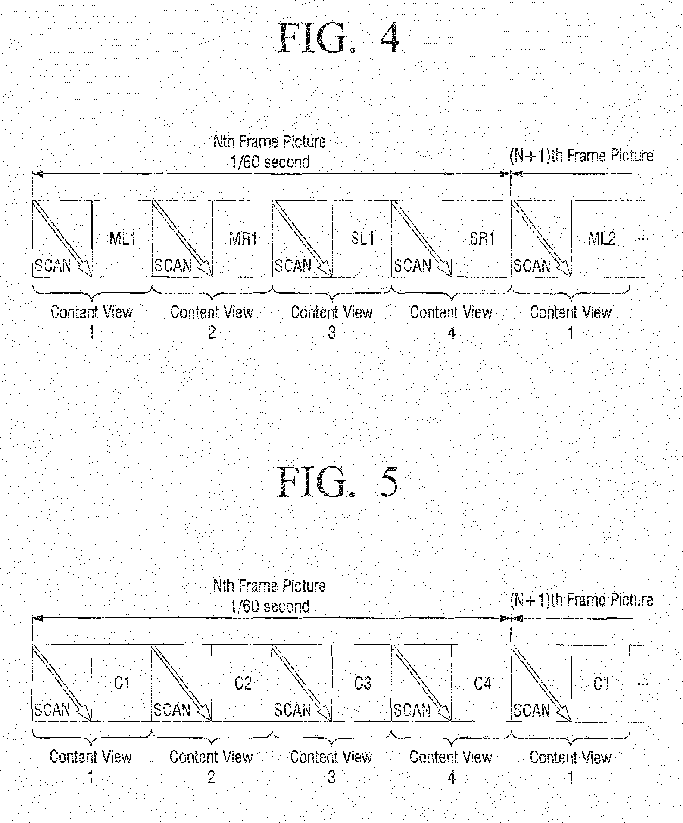

FIG. 4 is a diagram of content view constitution corresponding to the plurality of the 3D content. Referring to FIG. 4, left-eye images and right-eye images of two 3D content are arranged and displayed within one frame display cycle. Hence, when the output frame rate is 60Hz, the frame rate of the left-eye images and the right-eye images of each 3D content is converted to 24Hz. Unlike FIG. 2, the content views are organized in a pattern such as ML1, MR1, SL1 and SL2 in FIG. 4. That is, after the left-eye and right-eye images of the main 3D content are first displayed, the left-eye and right-eye images of the sub 3D content are displayed. To display the image frames, the display apparatus 100 scans to select the cell corresponding to pixels of the image frame by applying an address signal to each address electrode of the display panel. When the scanning is completed, the display apparatus 100 displays the corresponding image frame by applying a driving signal to a driving electrode connected to the cells. The scanning operation and the display operation are performed in every content view.

FIG. 5 is a diagram of content view constitution corresponding to the plurality of the 2D content. Referring to FIG. 5, four contents C1 through C4 are displayed in four content views respectively. Since merely the number and the arrangement of the content of FIG. 5 are different from FIG. 4, the same descriptions shall be omitted.

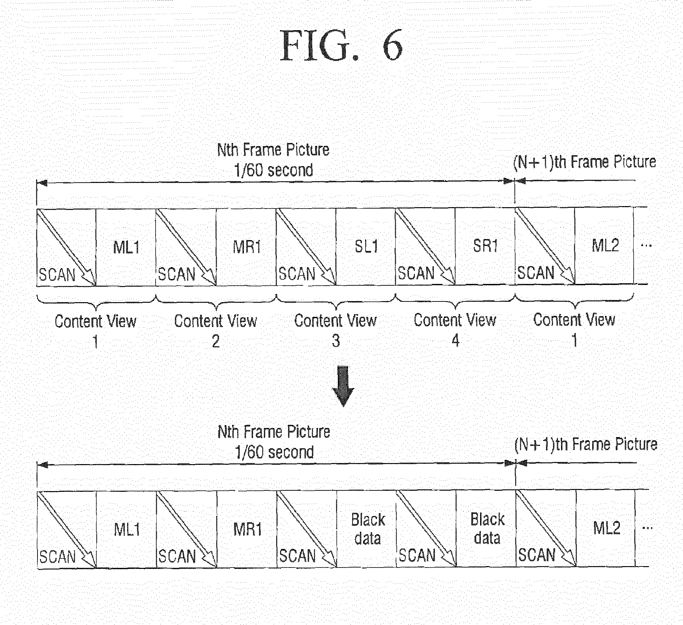

FIG. 6 is a diagram of a processing method when the glasses apparatus is turned off in the multi-view mode displaying the plurality of the 3D content. In FIG. 6, the second glasses apparatus 220 of the user who is watching the sub 3D content is turned off. The control unit 170 of the display apparatus 100 controls the signal processing unit 120 to insert an inactive screen to the locations corresponding to the third and fourth content views matched to the second glasses apparatus 220. Herein, the inactive screen may be a monochromatic screen such as black or blue screen, or a turn-off screen of a backlight or a display apparatus.

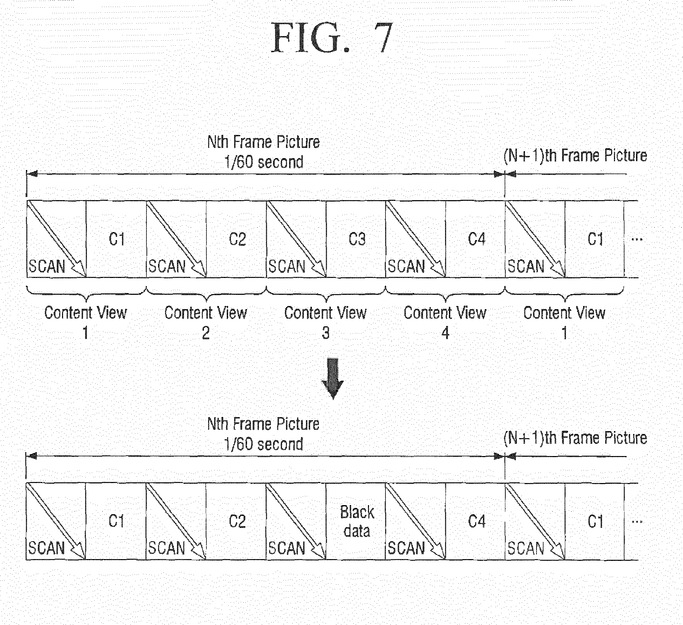

FIG. 7 is a diagram of a processing method when the glasses apparatus is turned off in the multi-view mode displaying the plurality of the 2D content. When the glasses apparatus viewing the third content view in the quadruple-view mode showing four content views is turned off, the inactive screen is inserted to the location of the third content view in FIG. 7.

When the viewer wearing one glasses apparatus leaves the seat in the multi-view mode, the mode can be changed. However, it is tiresome to manually change the mode every time the viewer leaves the seat and turns back after a while. Accordingly, when the viewer leaves the seat without a separate mode change command, the content view of the viewer can be deactivated automatically as shown in FIGS. 6 and 7 to thus save the power consumption.

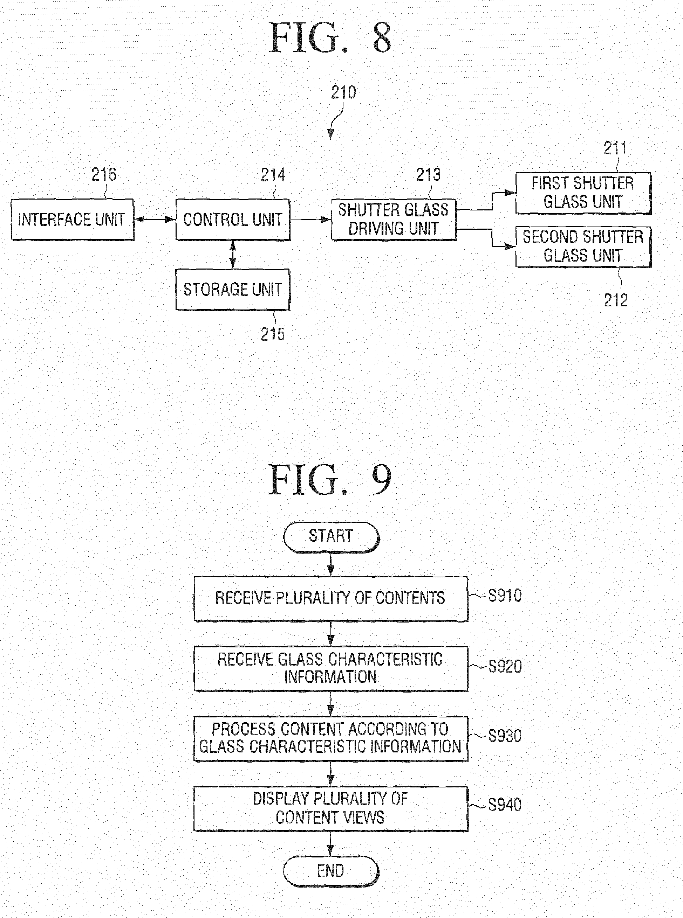

FIG. 8 is a block diagram of glasses apparatus according to an exemplary embodiment of the present general inventive concept. The glasses apparatus of FIG. 8 employs the shutter glass type. Referring to FIG. 8, the glasses apparatus 210 includes first and second shutter glass units 211 and 212, a shutter glass driving unit 213, a control unit 214, a storage unit 215, and an interface unit 216.

The interface unit 216 communicates with the display apparatus. The interface unit 216 can conform to various communication schemes. For example, the interface unit 216 may carry out the communication based on various wireless communication standards such as Bluetooth, Wi-Fi, Zigbee, and IEEE, RF signal transmission and reception, and IR signal transmission and reception.

The interface unit 216 can receive the synchronization signal from the display apparatus 100. The synchronization signal is a signal transmitted to synchronize one of the content views displayed in the display apparatus 100, and the glasses apparatus 210.

The control unit 214 controls operations of the glasses apparatus 210. The control unit 214 can pair with the display apparatus 100. When or after the paring is completed, the control unit 214 can transmit the glasses' characteristic information stored to the storage unit 215, to the display apparatus 100 through the interface unit 216. Hence, the user can watch the content view with the image quality processing corresponding to the glasses' characteristic information.

The control unit 214 controls the shutter glass driving unit 213 by sending the synchronization signal received at the interface unit 216 to the shutter glass driving unit 213.

The shutter glass driving unit 213 generates a driving signal based on the synchronization signal received from the control unit 214. In detail, the shutter glass driving unit 213 can turn on the first shutter glass unit 211 and the second shutter glass unit 212 according to the display timing of one of the content views displayed by the display apparatus 100, based on the synchronization signal.

The first shutter glass unit 211 and the second shutter glass unit 212 open or close the shutter glass according to the driving signal received from the shutter glass driving unit 213. In detail, the first shutter glass unit 211 and the second shutter glass unit 212 are opened together when the content view mapped to the glasses apparatus 210, among the plurality of the content views, is displayed, and closed together when other content is displayed. Hence, the user wearing the glasses apparatus 210 can view the content allocated to one content view.

Meanwhile, in the multi-view mode providing the plurality of the 3D content, the first shutter glass unit 211 and the second shutter glass unit 212 can be individually opened in synchronization with the output timing of the left-eye image and the right-eye image of the 3D content matched to the glass apparatus 210. That is, according to the driving signal, the shutter glass driving unit 213 can open the first shutter glass unit 211 at the display timing of the left-eye image of one 3D content and open the second shutter glass unit 212 at the display timing of the right-eye image.

FIG. 9 is a flowchart of a display method according to an exemplary embodiment of the present general inventive concept. Referring to FIG. 9, the display method receives the plurality of the content when the multi-view mode commences (S910) and receives the glasses' characteristic information from each glasses apparatus (S920).

The display method generates the image frame by processing each content according to the received glasses' characteristic information (S930), and displays the plurality of the content views by combining the generated image frames (S940). The operation for generating the image frames can include detecting image data of each content, generating the image frame by decoding the image data, and adjusting at least one of the white balance, the contrast, the brightness, the color, the optical intensity, and the optical wavelength of the image frame of each content according to the glasses' characteristic information.

While it is not illustrated in FIG. 9, the method can further include pairing with the plurality of the glasses apparatus, and sequentially matching the glasses apparatus and the content views according to the pairing order.

Meanwhile, when the glasses' characteristic information is pre-stored, the stored glasses' characteristic information may be used. The glasses' characteristic information has been described in detail and shall not be further explained.

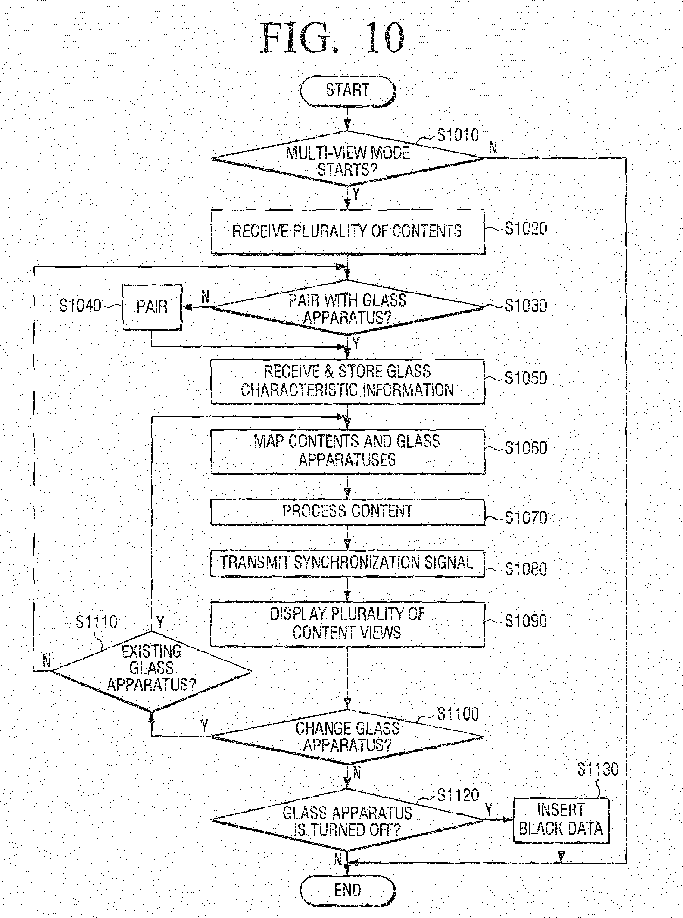

FIG. 10 is a flowchart of a display method according to another exemplary embodiment of the present general inventive concept. Referring to FIG. 10, when the multi-view mode starts (S1010), the method receives the plurality of the content (S1020). At this time, when there is no pairing glasses apparatus (S1030), the method performs the pairing (S1040). When the pairing glasses apparatus exists (S1030) or the pairing with the glasses apparatus is conducted (S1040), the method receives and stores the glasses' characteristic information from the pairing glasses apparatus (S1050). The method matches the content view and the glasses apparatus (S1060). The matching may be carried out between the content view selected in the glasses apparatus and the corresponding glasses apparatus in the pairing process, or sequentially in the order of the content views according to the pairing order.

The method generates the image frame by processing the content corresponding to each content view according to the glasses' characteristic information of the glasses apparatus matched to the corresponding content view (S1070), sends the synchronization signal (S1080), and displays the plurality of the content views by combining the image frames of the content (S1090).

Next, when the glasses apparatus is changed (S1100), the method determines whether the changed glasses apparatus is the existing glasses apparatus pre-storing the glasses' characteristic information (S1110). When determining the existing glasses apparatus, the method matches the content view and the corresponding glasses apparatus (S1060) and processes the content using the glasses' characteristic information (S1070). When determining the new glasses apparatus, the method newly performs the pairing (S1030 and S1040) and newly receives and stores the glasses' characteristic information by requesting the glasses' characteristic information (S1050). Hence, the method processes the content using the newly received glasses' characteristic information (S1070).

Next, when the glasses apparatus is turned off (S1120), black data or an inactive screen is inserted in content views corresponding to the turned off glasses apparatus (S1130). The operations of FIG. 10 may be partially omitted, added, or modified in various implementations.

As above, the optimal image quality can be provided by correcting the driving status of the glasses apparatus in accordance with the characteristics of each glasses apparatus or adjusting the image quality.

In the meantime, while the content is processed using the glasses' characteristic information in various exemplary embodiments, the synchronization signal may be generated and provided in accordance with the display apparatus and the glasses apparatus.

That is, the storage unit 160 of the display apparatus 100 of FIG. 1 can store the driving information in addition to the glasses' characteristic information.

As stated above, the driving information can include display panel driving information of the display apparatus 100, delay information, individual glasses' operation information, on duty value information, and status information display method. To display the image frame on the display panel, it is necessary to scan the liquid crystal cells of the display panel and to display the image by applying the driving signal. Herein, the scanning manner, the scan timing, and the display timing can vary. The delay information is information indicating the time to delay based on the synchronization when the frequency to drive the glasses apparatus is transmitted in accordance with the image driven by the display apparatus 100. The individual glasses' operation information is information defining the different driving schemes per glasses apparatus. The on duty value information is information designating the time to turn on the glasses when the left eye and the right eye are alternately driven, and the status information display method is information for displaying the status such as power on, pairing, power off, and malfunction by reflecting different protocols of products or manufacturers.

When the multi-view mode starts, the control unit 170 controls the synchronization signal generating unit 140 and the interface unit 150 to generates the synchronization signal for synchronizing the plurality of the content views and the plurality of the glasses apparatus using the driving information and the glasses' characteristic information stored to the storage unit 160, and to transmit the synchronization signal to each glasses apparatus.

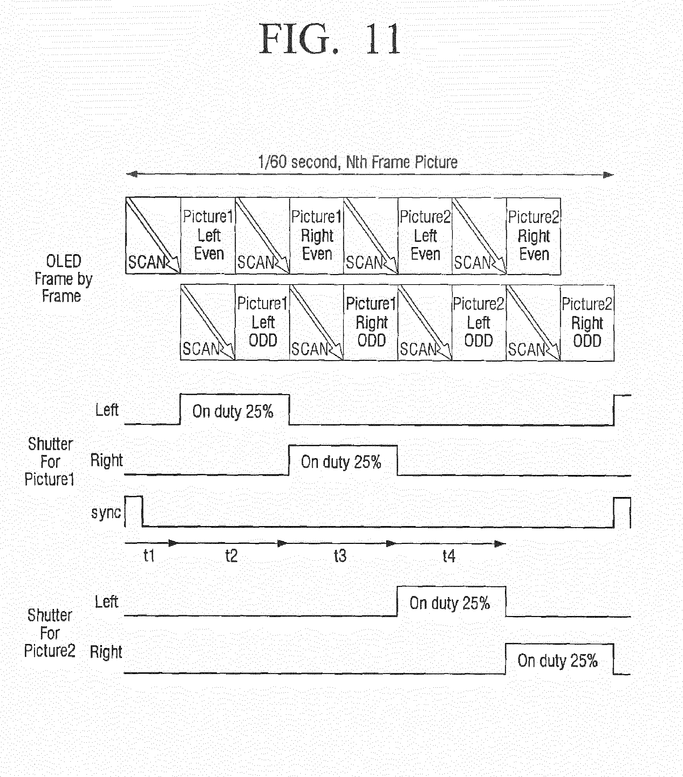

FIG. 11 is a diagram of a first driving scheme of a 3D multi-view mode. Referring to FIG. 11, to raise the light emission efficiency, the display apparatus 100 can perform the scanning twice by dividing to even lines and odd lines. That is, after scanning the even lines of the left-eye image of the first picture, the display apparatus 100 scans the odd lines of the corresponding left-eye image while the even lines are displayed. The display apparatus 100 scans the even lines of the right-eye image of the first picture while the scanned odd lines are displayed. Since the scan and the display are alternately performed based on the odd lines and the even lines of the display panel, it is possible to reduce the standby time taken for the scan and to extend the display time.

The control unit 170 controls the signal processing unit 120 and the output unit 130 to perform the scan job and the display job as shown in FIG. 11, and controls the synchronization signal generating unit 140 to generate the synchronization signal by determining the delay time and the on duty ratio in accordance with the display interval.

Referring to FIG. 11, the on duty ratio is set to 25% so as to open the left-eye glass of the first glasses apparatus 210 while the even line and the odd line of the left-eye image of the first picture are sequentially displayed, and to open the right-eye glass of the second glasses apparatus 220 while the even line and the odd line of the left-eye image are sequentially displayed. It is possible to determine the time t1 from the rising edge of the sync signal to the start of the left-eye image display and the time t2 from the time t1 to the start of the right-eye image display. The control unit 170 can also determine the delay time and the on duty ratio of the second glasses apparatus 220. Hence, the control unit 170 can control the synchronization signal generating unit 140 and the interface unit 150 to generate the synchronization signal including the driving control information such as delay times t1 through t4 and on duty ratio and to transmit the synchronization signal to the glasses apparatus 210 and 220.

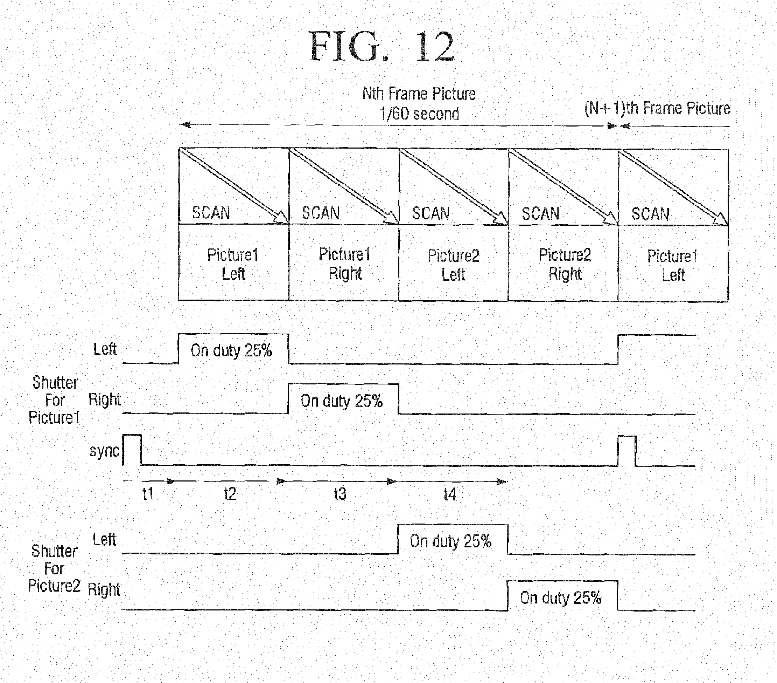

FIG. 12 is a diagram of a second driving scheme of the 3D multi-view mode. Referring to FIG. 12, as the left-eye image of the first picture which is the first 3D content is displayed on the display panel, the right-eye image of the first picture is scanned. That is, data of the right-eye image is recorded to a separate buffer on the frame basis. When the display of the left-eye image is completed, the right-eye image is displayed using the data of the right-eye image recorded to the buffer. As the right-eye image is displayed, the left-eye image of the second picture which is the second 3D content is scanned.

Since four content views are provided in FIG. 12, the on duty ratio is set to 25% and the delay times t1 through t4 for indicating the on interval of each shutter glass are provided as the synchronization signal together with the on duty ratio information.

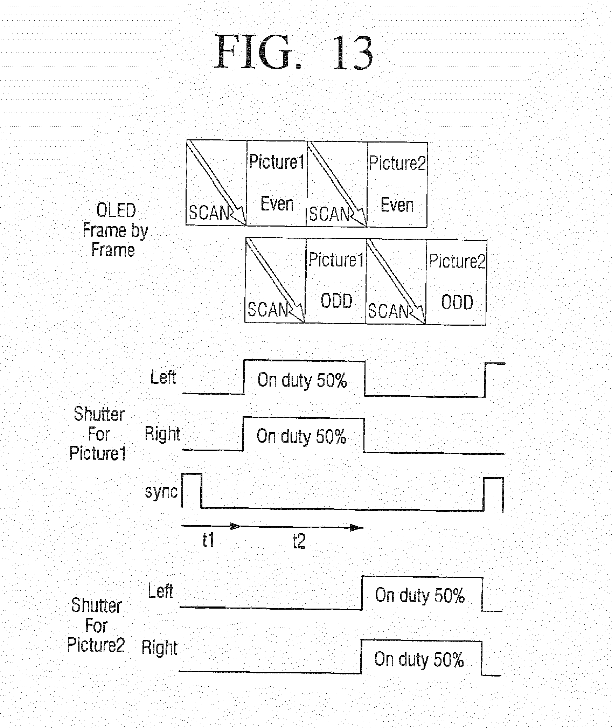

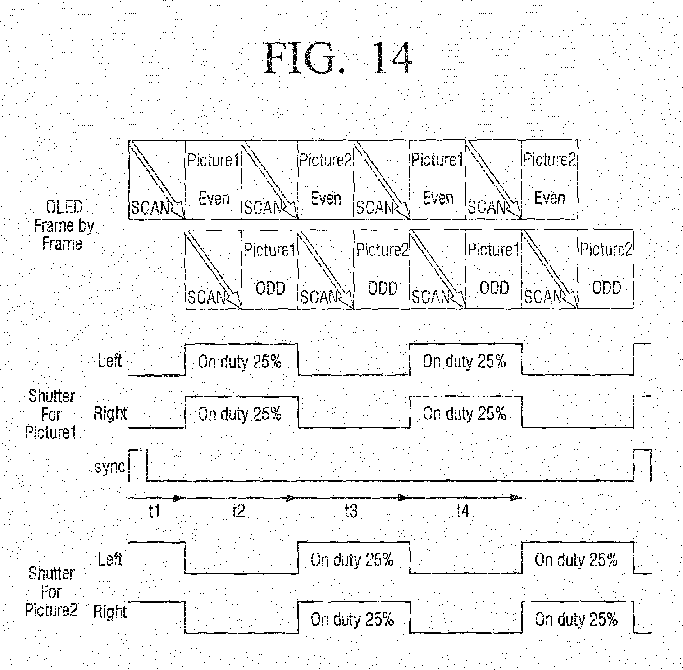

FIGS. 13 and 14 are diagrams of the first driving scheme of a 2D multi-view mode for scanning and displaying frames several times by dividing every frame into even lines and odd lines.

FIG. 13 depicts two content displayed once by dividing to the even lines and the odd lines. Hence, the on duty ratio information of 50% and the delay time information t1 and t2 are carried by the synchronization signal.

FIG. 14 depicts two content displayed twice by dividing to the even lines and the odd lines. That is, referring to FIG. 14, after the even line and the odd line of the first picture are scanned and displayed once, the even line and the odd line of the second picture are scanned and displayed once and the even line and the odd line of the first picture are scanned and displayed once again. As such, when the frame of the pictures is displayed twice, the resolution can be enhanced more. In FIG. 14, the display apparatus includes the on duty ratio information for turning on the shutter glass with 25% and the delay time information of t1 through t4 to the synchronization signal, and transmits the synchronization signal.

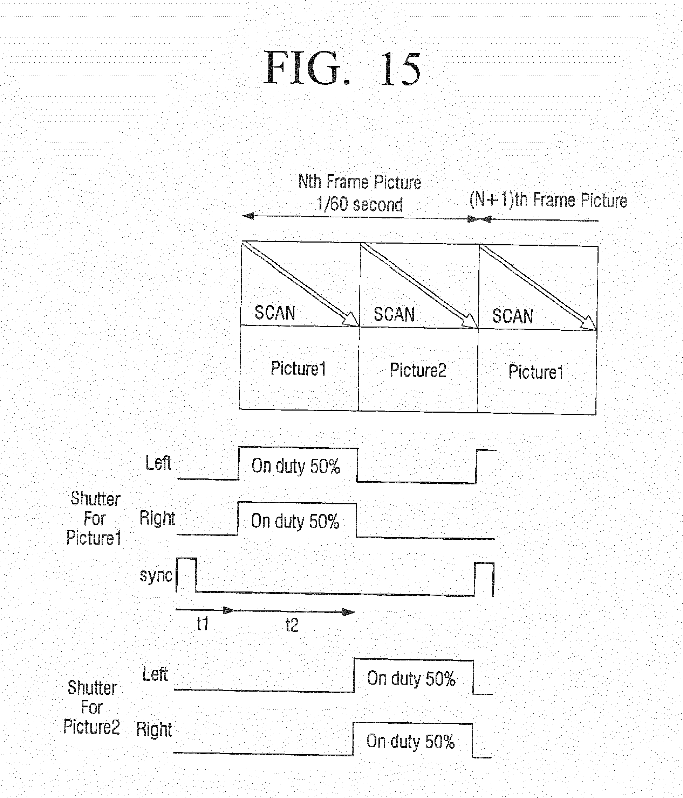

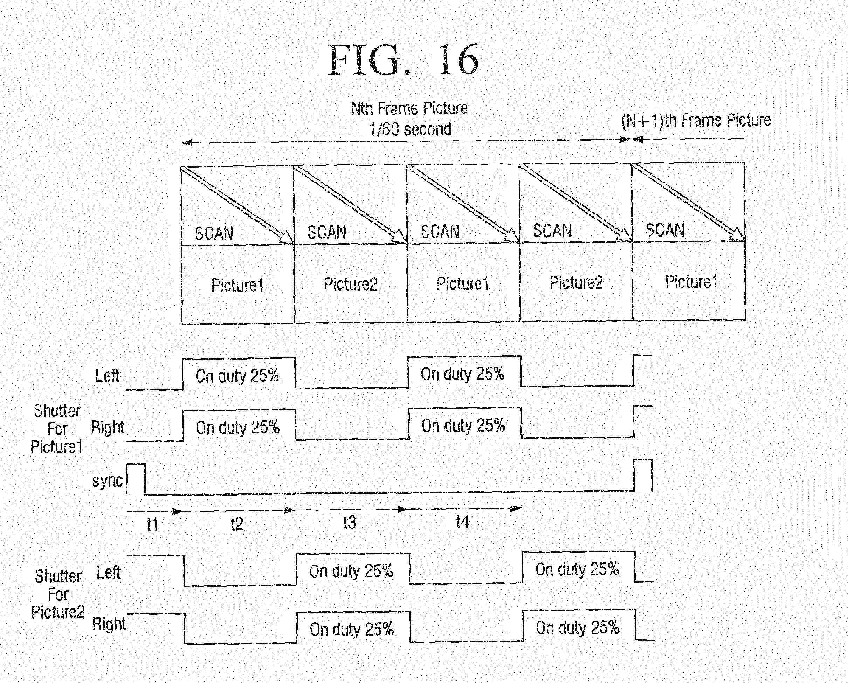

FIGS. 15 and 16 are diagrams of the second driving scheme of a 2D multi-view mode for scanning and displaying on the frame basis.

FIG. 15 depicts two content scanned and displayed once on the whole frame basis. Hence, the on duty ratio information of 50% and the delay time information t1 and t2 are carried by the synchronization signal.

FIG. 16 depicts two content scanned and displayed twice on the whole frame basis. Hence, the on duty ratio information of 25% and the delay time information t1 through t4 are carried by the synchronization signal.

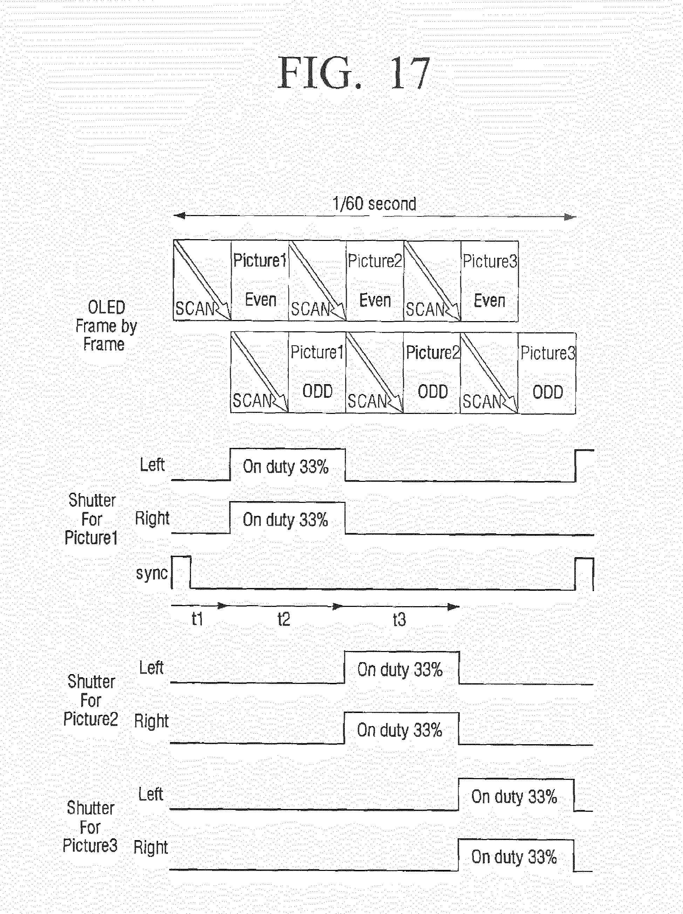

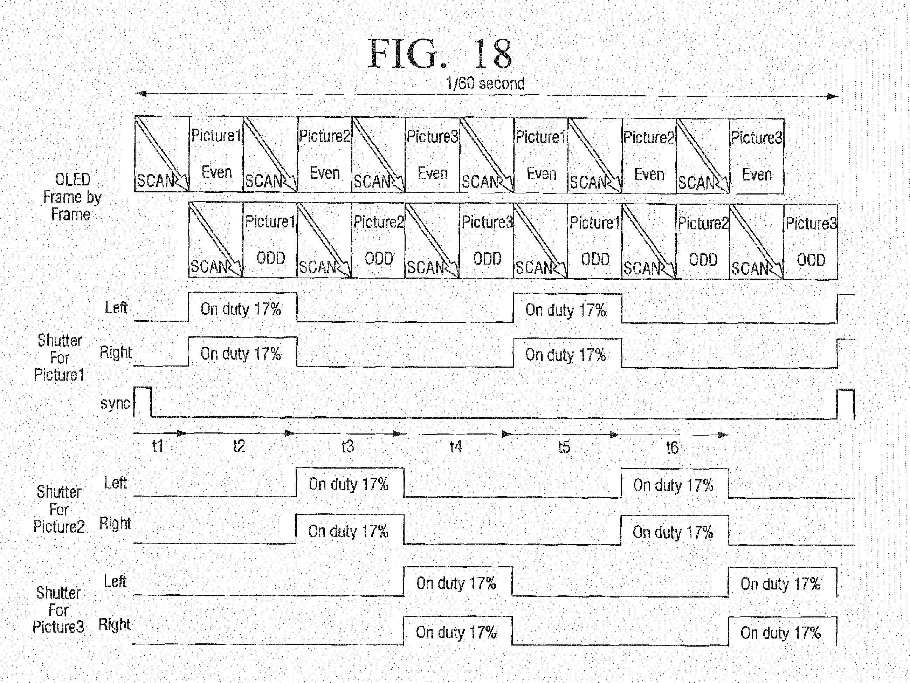

FIGS. 17 and 18 are diagrams of the first driving scheme of the 2D triple-view mode for scanning and displaying content several times by dividing every frame into even lines and odd lines.

Referring to FIG. 17, three 2D content are sequentially scanned and displayed based on the even line and the odd line. Thus, three content views are provided and the one duty ratio is set to 33%. Three delay time information such as t1, t2 and t3 are calculated.

Referring to FIG. 18, three 2D content are sequentially scanned and displayed based on the even line and the odd line, and then sequentially scanned and displayed once more. That is, the frames of each content are displayed two times. Thus, the on duty ratio is set to 17%. Six delay time information of t1 through t6 are calculated.

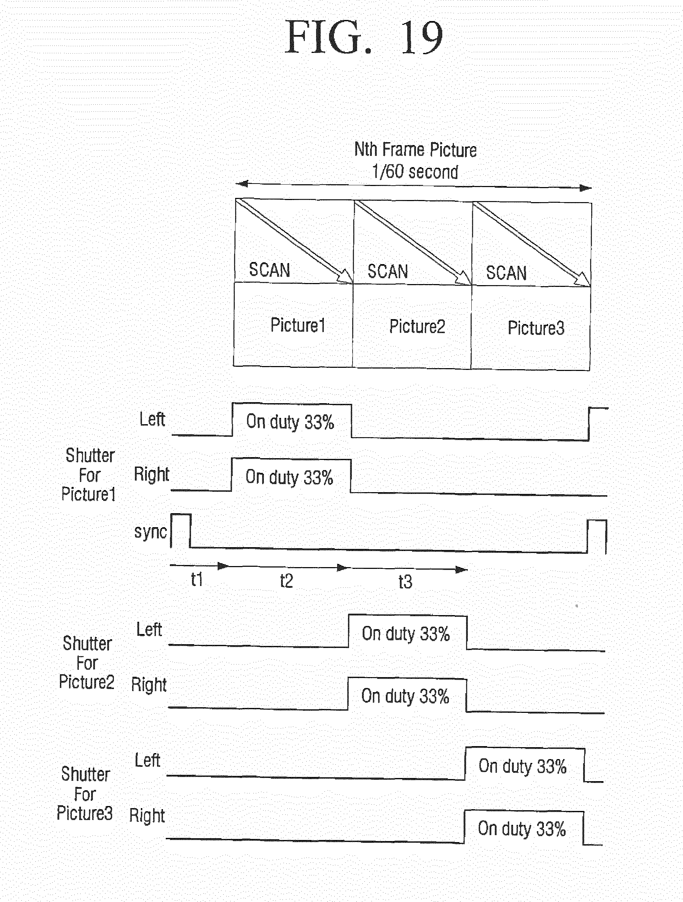

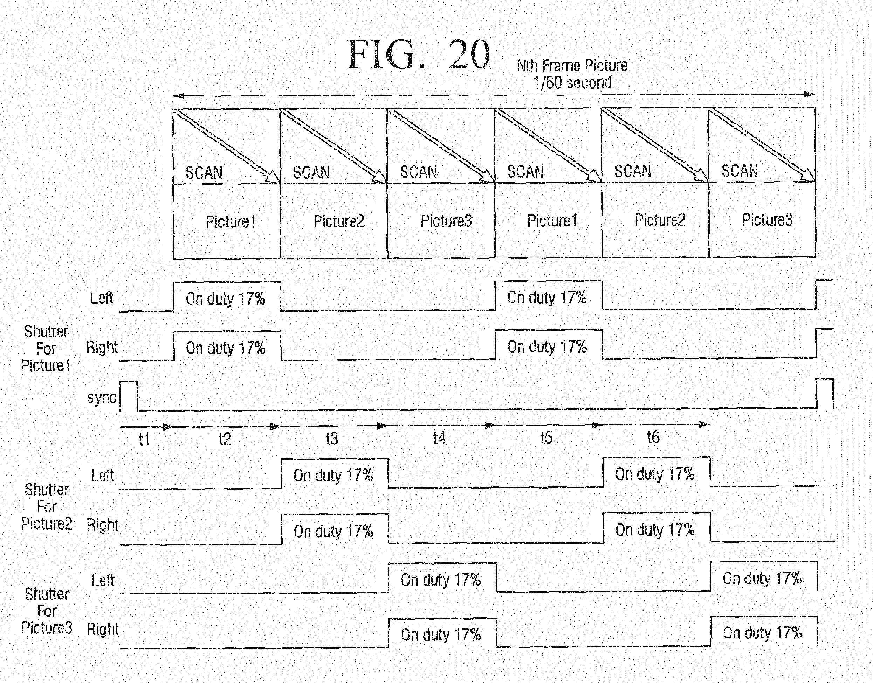

FIGS. 19 and 20 are diagrams of the second driving scheme of the 2D triple-view mode for the scan and the display on the frame basis.

Referring to FIG. 19, three 2D content are scanned and displayed once on the frame basis. Accordingly, the on duty ratio is set to 33% and three delay time information of t1, t2 and t3 are calculated.

Referring to FIG. 20, three 2D content are scanned and displayed once on the frame basis, and then sequentially scanned and displayed once more. At this time, the on duty ratio is set to 17% and six delay time information of t1 through t6 are calculated.

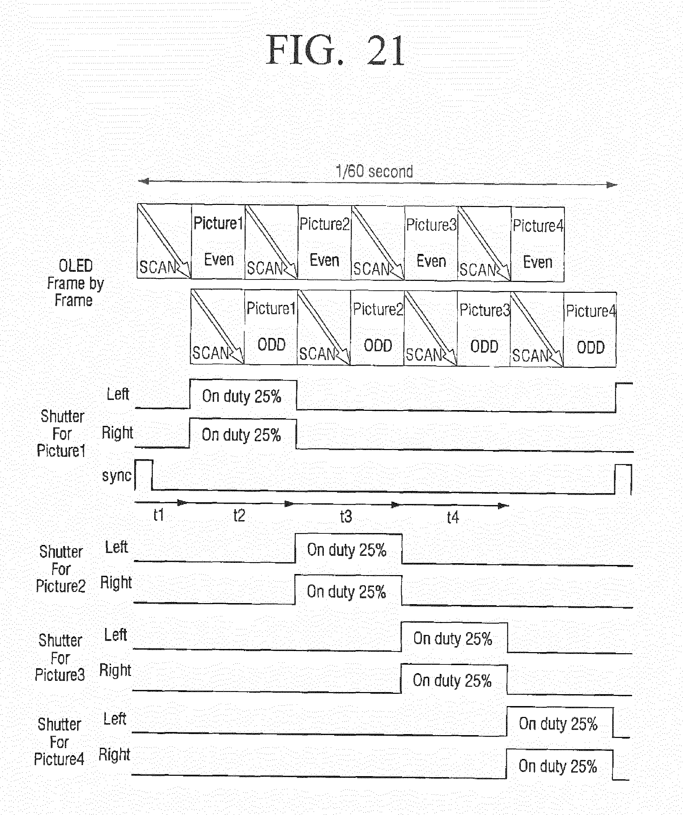

FIG. 21 depicts the sequential scan and display of four 2D content divided into the even lines and the odd lines. Referring to FIG. 21, the on duty ratio is set to 25% and four delay time information of t1 through t4 are calculated.

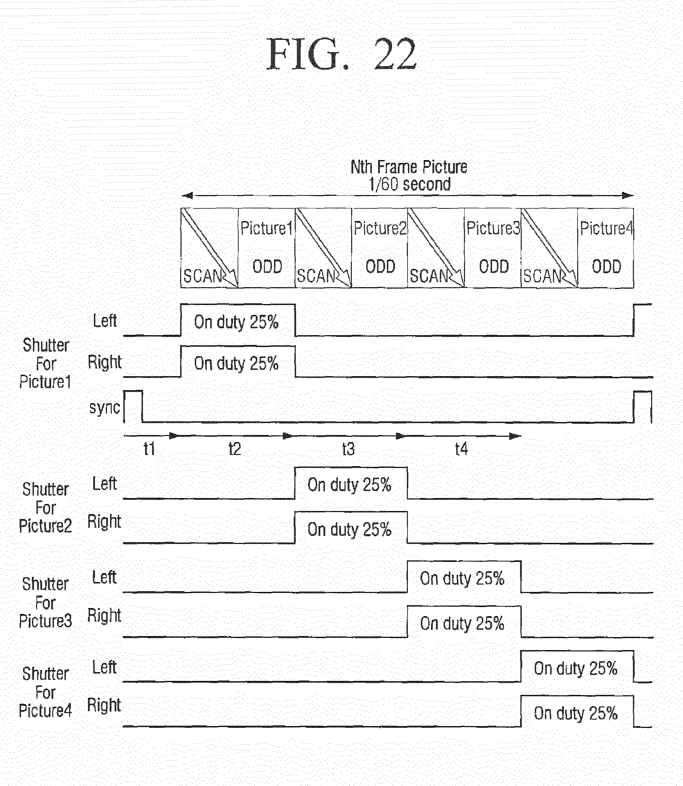

FIG. 22 depicts four 2D content scanned and displayed once on the frame basis. Referring to FIG. 22, the on duty ratio is set to 25% and four delay time information of t1 through t4 are calculated.

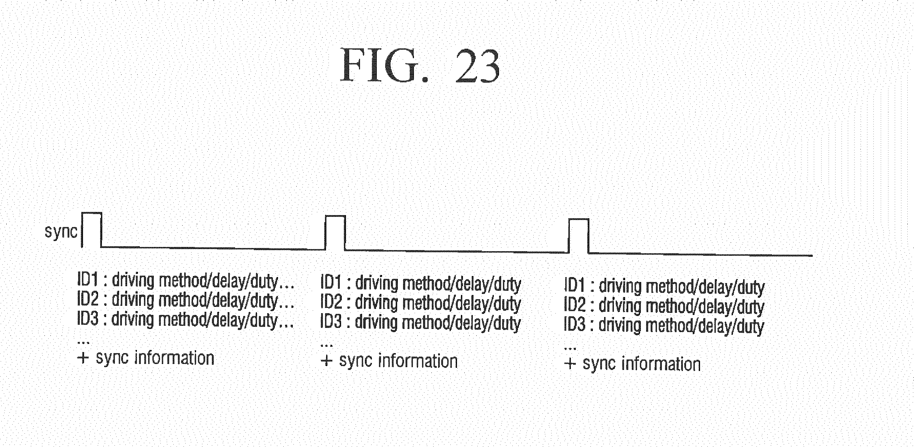

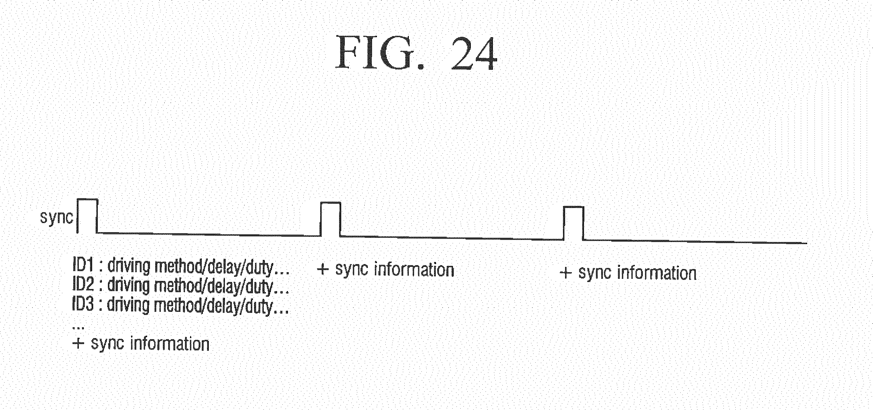

FIGS. 23 and 24 are diagrams of various synchronization signal transmission methods.

Referring to FIG. 23, the synchronization signal is divided by a plurality of synchronization cycles. Each synchronization cycle is identified by the rising edge or the falling edge of the pulse indicating the synchronization information.

The synchronization signal generating unit 140 can generate the synchronization signal including unique information of each glasses apparatus, and the driving control information for controlling the driving of each glasses apparatus per synchronization cycle, and transmit the generated synchronization signal through the interface unit 150. The unique information can be an ID of the glasses apparatus. As described earlier, the driving control information can be the driving method information, the delay time, and the on duty ratio information. The driving method information can indicate whether the content is scanned and displayed based on the odd line and the even line, and whether the content is scanned and displayed on the frame basis as stated earlier. The synchronization signal can include all of the unique information of the glasses apparatus paired with the display apparatus 100, and the matching driving control information. Besides, the synchronization signal may further include various necessary information or additional information.

FIG. 24 depicts that the unique information and the driving control information of each glasses apparatus are transmitted in the initial synchronization cycle, and then only the synchronization signal is transmitted in the subsequent cycles. When the data transmission amount is burdensome, various information necessary for the driving are transmitted in the initial stage, and then the synchronization signal, that is, the sync alone is transmitted as shown in FIG. 24. Each glasses apparatus can store the initially transmitted various information to their memory, and operate in accordance with the synchronization signal transmitted subsequently.

Meanwhile, when one glasses apparatus is turned off in the multi-view mode which the plurality of the 3D content is displayed, the control unit 170 may control the signal processing unit 120 to insert the inactive screen to the location of the content view matched to the corresponding glasses apparatus. When the viewer wearing one glasses apparatus leaves the seat in the multi-view mode, the mode can be changed. However, it is tiresome to manually change the mode every time the viewer leaves the seat and turns back after a while. Accordingly, when the viewer leaves the seat without a separate mode change command, the content view of the viewer can be automatically deactivated to thus save the power consumption.

The user can watch the display apparatus 100 using the glasses apparatus of FIG. 8. Hence, when the display apparatus 100 transmits the synchronization signal generated by considering the glasses' characteristic information and the driving information, the control unit 214 of the glasses apparatus 210 receives the synchronization signal through the interface unit 216.

The control unit 214 controls the shutter glass driving unit 213 by forwarding the synchronization signal received at the interface unit 216 to the shutter glass driving unit 213. As explained above, the synchronization signal can include the unique information of the glasses apparatus 210 and the driving control information such as on duty ratio or delay time. The control unit 214 can detect the driving control information corresponding to the glasses apparatus 210 from the unique information. The control unit 214 controls the shutter glass driving unit 213 to drive the first and second shutter glass units 211 and 212 according to the detected driving control information.

The shutter glass driving unit 213 generates the driving signal under the control of the control unit 214. In detail, the shutter glass driving unit 213 can turn on the first shutter glass unit 211 and the second shutter glass unit 212 one by one or at the same time after the delay time from the riding edge or the falling edge of the synchronization signal.

Thus, the user can effectively watch the content view matched to the glasses apparatus 210 in the multi-view mode.

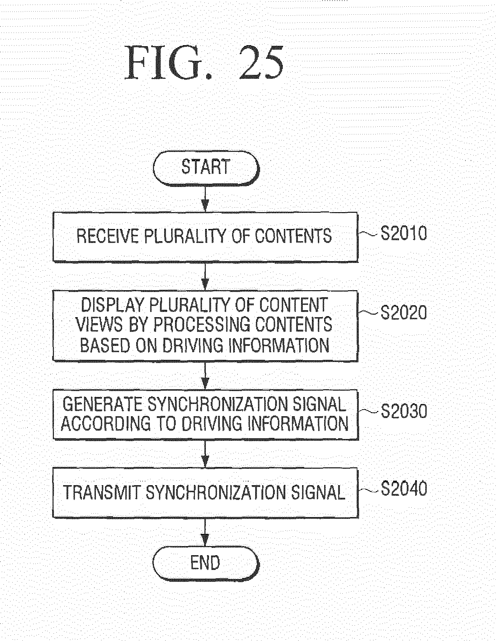

FIG. 25 is a flowchart of a display method according to an exemplary embodiment of the present general inventive concept. Referring to FIG. 25, when the multi-view mode begins, the method receives the plurality of the content (S2010) and displays the plurality of the content views by processing the content according to the pre-stored driving information (S2020). The method generates the synchronization signal according to the display characteristics of the content view using the driving information (S2030) and transmits the generated synchronization signal to each glasses apparatus (S2040). The display of the content view and the characteristics of the synchronization signal have been explained and thus shall not be further mentioned.

While it is not illustrated in FIG. 25, the method may further include pairing with the plurality of the glasses apparatus, and sequentially matching the plurality of the glasses apparatus and the plurality of the content views according to the pairing order.

As set forth above, the content can be processed and the glasses apparatus can be synchronized by considering various information such as driving characteristics of the display apparatus and glasses' characteristic information of the glasses apparatus.

The above exemplary embodiments can be realized individually or in combination. That is, as the content is processed and displayed in accordance with the glasses' characteristic information, the synchronization signal may be generated and transmitted to the glasses' apparatus by considering the driving information of the display apparatus as well. Thus, optimal content viewing environment can be provided.

The display method according to various exemplary embodiments can be programmed as an application and provided to the display apparatus and the glasses apparatus.

In detail, a non-transitory computer readable medium containing a program for sequentially conducting the operation for receiving the plurality of the content, the operation for receiving the glasses' characteristic information from the glasses apparatus, the operation for generating the image frame by processing the content according to the glasses' characteristic information of each glasses apparatus, and the operation for displaying the plurality of the content views by combining the image frames of the content, can be embedded in the display apparatus or connected to the display apparatus. Such a program may be downloaded from various sources such as web server or management server.

Alternatively, the program for sequentially performing the operation for receiving the plurality of the content, the operation for generating the image frames by processing the plurality of the content and displaying the plurality of the content views by combining the image frames of the content, the operation for generating the synchronization signal for synchronizing the content views and the glasses apparatus using the pre-stored driving information and the glasses' characteristic information, and the operation for transmitting the synchronization signal to each glasses apparatus can be provided to the display apparatus through the non-transitory computer readable medium or the network.

The non-transitory computer readable medium indicates a medium which stores data semi-permanently and is readable by a device, rather than the media such as register, cache, and memory for storing data for a short term. More specifically, various applications or programs can be stored and provided to the non-transitory computer readable medium such as CD, DVD, hard disc, Blu-ray disc, USB, memory card, and ROM.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

**1.** A display apparatus comprising:
a plurality of receivers which receive a plurality of content;
a signal processor which generates image frames by processing each content of the plurality of content;
an output which displays a plurality of content views by combining the image frames of each content of the plurality of content;
a synchronization signal generator which generates a synchronization signal to synchronize the plurality of the content views and a plurality of glasses apparatuses;
an interface which transmits the synchronization signal to the plurality of the glasses apparatuses;
a storage which stores glasses' characteristic information; and
a controller which controls the signal processor to process the plurality of the content according to the glasses' characteristic information.

**2.** The display apparatus of claim 1, wherein, when a new glasses apparatus is added, the controller requests and receives the glasses' characteristic information from the new glasses apparatus.

**3.** The display apparatus of claim 1 or 2, wherein the interface pairs with the plurality of the glasses apparatuses, and
when pairing with the plurality of the glasses apparatuses, the controller sequentially matches the plurality of the glasses apparatuses and the plurality of the content views according to a pairing order.

**4.** The display apparatus of any one of claim 1 to 3, wherein the controller processes to adjust at least one of a white balance, a contrast, a brightness, a color, an optical wavelength, and an optical intensity of the image frame of each content of the plurality of content according to the glasses' characteristic information.

**5.** The display apparatus of any one of claim 1 to 4, wherein, when at least one of the glasses apparatus is turned off, the controller controls the signal processor and the output to output an inactive screen in the content view corresponding to the turned-off glasses apparatus.

**7.** The display apparatus of any one of claim 1 to 6, wherein the storage stores driving information of the display apparatus, and
the controller controls the synchronization signal generator and the interface to generate the synchronization signal to synchronize the plurality of the content views and the plurality of the glasses apparatus using the driving information and the glasses' characteristic information and to transmit the synchronization signal to each glasses' apparatus of the plurality of glasses apparatuses.

**8.** The display apparatus of claim 7, wherein the controller controls the signal processor and the output to divide the image frames of the content views to odd line frames and even line frames, to alternately display the frames in one content view, and to scan another frame on a display panel while one of the odd line frame and the even line frame is displayed.

**9.** The display apparatus of claim 8, wherein the controller determines a delay time and a duty to drive the glasses apparatus matched to the content view while the odd line frame and the even line frame are displayed in one content view using the driving information, and controls the synchronization signal generator to generate the synchronization signal comprising information of the determined delay time and duty.

**10.** The display apparatus of claim 7, wherein the controller controls the output to scan image frame data of a next content view while an image frame of a previous content view among the plurality of the content views is displayed, and to display the image frame of the next content view scanned when the image frame display of the previous content view is completed.

**11.** The display apparatus of claim 10, wherein the controller determines a delay time and a duty to drive the glasses apparatus matched to the corresponding content view while the image frame of each content view of the plurality of content views is displayed using the driving information, and controls the synchronization signal generator to generate the synchronization signal comprising information of the determined delay time and duty.

**12.** The display apparatus of claim 7, wherein the synchronization signal generator generates the synchronization signal comprising unique information of each glasses apparatus of the plurality of glasses apparatuses and driving control information to control a driving status of each glasses apparatus of the plurality of glasses apparatuses based on a plurality of synchronization cycles, and transmits the synchronization signal through the interface.

**13.** A display method of a display apparatus, comprising:
receiving a plurality of content;
receiving glasses' characteristic information from a plurality of glasses apparatuses;
generating image frames by processing the plurality of the content according to the glasses' characteristic information of each glasses' apparatus of the plurality of glasses apparatuses; and
displaying a plurality of content views by combining the image frames of each content of the plurality of content.

**14.** A glasses apparatus working with a display apparatus which provides a plurality of content views, comprising:
a first shutter glass apparatus;
a second shutter glass apparatus;
an interface which receives a synchronization signal from the display apparatus;
a shutter glass driver which drives the first and second shutter glasses apparatuses according to the synchronization signal;
a storage which stores glasses' characteristic information; and
a controller which transmits the glasses' characteristic information to the display apparatus through the interface.

**15.** A display system comprising:
a display apparatus which, when a multi-view mode starts, receives a plurality of content and displays a plurality of content views by combining image frames of each content; and
at least one glasses apparatus which drives in synchronization with an output timing of the matching content view among the plurality of the content,
wherein the display apparatus processes the content of the content view matched to the at least one glasses apparatus using glasses' characteristic information of the at least one glasses apparatus.
